# EUROPEAN PATENT SPECIFICATION

(11) **EP 3 730 419 B1**
(45) Date of publication and mention of the grant of the patent: **07.06.2023**
(21) Application number: 20170370.9
(22) Date of filing: 20.04.2020
(51) Int. Cl.: B65D 19/12, B65D 19/10, E05C 19/00

(54) **CONTAINER**
BEHÄLTER
RÉCIPIENT

(30) Priority: 26.04.2019 FI 20195338
(43) Date of publication of application: 28.10.2020
(73) Proprietor: K. Hartwall Oy AB, 01150 Söderkulla (FI)
(72) Inventor: PÖLÖNEN, Jari, 01150 Söderkulla (FI); JÄRVI, Mikko, 01150 Söderkulla (FI); GRÖNHOLM, Jack, 01150 Söderkulla (FI)
(74) Representative: Laine IP Oy

(56) References cited:
- EP-A2- 0 321 859
- CH-A5- 678 842
- FR-A1- 2 131 883
- FR-A1- 2 341 491
- JP-A- H10 167 269

## Description

### FIELD

The present disclosure relates to cargo handling equipment. In particular, the disclosure relates to closing mechanisms of closable containers used for bundling up items during transport and for temporary storage, such as cages. More precisely, the disclosure relates to a container according to the preamble portion of claim 1.

### BACKGROUND

Parceled goods have been traditionally transported by stacking the goods on pallets, wrapping the unit with shrink wrap and loading the wrapped pallets onto trailers or trucks. The traditional way of handling parceled freight has been deemed uneconomical due to the labor intensity of packing pallets, extensive use of packing material, such as shrink wrap and cardboard. Traditional pallets have also provided little protection against brisk handling, which has resulted in damages and increased the cost of transport. To tackle these problems, collecting cages have been introduced.

Collecting containers, such as cages, are typically stackable and foldable cages made of high tensile steel that provides an attractive alternative to distribution and storage of high volume goods. The collecting cages, cages in short, are usually handled with a fork lift similarly to traditional pallets. Because the cages are stackable, they can be stacked on top each other, which enables high volumetric efficiency when transporting full cages. On the other hand, because the cages are foldable, high volumetric efficiency is also achieved when transporting empty cages. One such gage, or crate, is disclosed in CH 678842 A5. Furthermore, the robust structure of the cage protects the cargo during handling.

While the folding option provides for outstanding volumetric efficiency, it also requires the operator to secure and release the walls of the containers to and from each other. Known locking mechanisms may require several stages of operation to lock or unlock thus making the folding of the container laborious and time consuming.

There is therefore a need for an improved container, the walls of which may be conveniently locked to and released from each other during erection or folding of the container.

### SUMMARY

The invention is defined by the features of the independent claim. Some specific embodiments are defined in the dependent claims.

There is particularly provided a novel container with a first wall and a second wall which can be opened and closed in respect to the first wall through a range of motion, in which the second wall undergoes translation in a first dimension and rotation about a rotation axis which extends in a second dimension. The container includes a locking mechanism for selectively securing the second wall to the first wall. The locking mechanism includes a catch provided to the first wall and a latch rotatably provided to the second wall. The locking mechanism also includes a claw projecting from the second wall in the first dimension. The catch is shaped to receive the claw in the first dimension upon said translation of the second wall. The catch is also shaped to guide the claw in a third dimension to a restricted section of the catch upon said rotation of the second wall, wherein the catch prevents the claw from being moved in the first dimension. The catch is shaped to receive the latch to the closed position for preventing the claw from being moved in the third dimension.

Various embodiments of the first aspect may comprise at least one feature from the following itemized list:
- the locking mechanism comprises an axle which is configured to connect the latch rotatably to the first wall,
- the axle is configured to produce an axis of rotation which extends in the third dimension,
- the latch is rotatably provided to the second wall for manipulation between a closed position, in which the latch engages the catch, and an open position, in which the latch is disengaged from the catch;
- the claw comprises a first section, which extends from the second wall in the second dimension, and a second section, which extends from the first section in the first dimension,
- the catch comprises a bracket, which is shaped to define a space, and a first stopper, which is configured to separate the space into the restricted section, which is limited in the first dimension, and to an unrestricted section, which is not limited in the first dimension in the region, in which the claw is moved into and out of the catch.
- the first stopper extends in the third dimension,
- the bracket is configured to receive the latch into the unrestricted section, when the claw is in the restricted section;
- the claw and the latch are configured to fill the space in the third dimension,
- the bracket comprises a second stopper which is configured to engage the latch and to limit the rotation thereof,
- the bracket is configured to enclose the space in the third dimension for preventing the latch from moving in the third dimension, when the latch is in the closed position,
- the second wall comprises a peripheral frame,
- the latch comprises a third stopper which is configured to limit the rotation of the latch by engaging the frame from the outside of the frame,
- the second wall comprises at least one opening within the periphery defined by the frame,
- the latch comprises a fourth stopper which is provided to the at least one opening and configured to limit the rotation of the latch and by engaging the frame from the inside,
- the second wall comprises a first panel, a second panel and a hinge, which is configured to hinge the first panel in respect to the second panel so as to allow translation of the second panel in the first dimension and rotation about the rotation axis, which extends in a second dimension,
- the latch and claw are provided to the second panel of the first wall,
- the container comprises a third wall opposing the first wall,
- the second wall extends between the first wall and third wall,
- a second such locking mechanism is provided to lock the second wall to the third wall,
- the container comprises a fourth wall opposing the second wall,
- the fourth wall is similar to the second wall,
- a third and fourth such locking mechanisms are provided to lock the fourth wall to the first and third wall,
- the container comprises a base,
- the walls are connected to the base through a folding mechanism for selectively folding and erecting the walls,
- the container is a folding container,
- the dimensions are Cartesian dimensions,
- the first dimension is vertical,
- the range of motion of the second wall is guided by the hinge.

Considerable benefits are gained with aid of the present proposal. The novel locking mechanism provides for a convenient locking action. By using the latch, which has traditionally been used for providing positive engagement, for positioning a claw of the movable wall into the catch, the movement of the latch can be made light. This, in turn, serves the purpose of making the operation of the locking mechanism easy for the user. The positioning purpose of the latch also facilitates unlocking of the mechanism. Because the latch need simply to be lifted up to release the claw from the restricted section of the catch, the locking mechanism may be unlocked virtually automatically by lifting the second wall. The unlocking action is therefore particularly fast and ergonomic.

### BRIEF DESCRIPTION OF THE DRAWINGS

Certain exemplary embodiments are described in the following with reference to the accompanying drawings, in which:
FIGURE 1 illustrates a perspective view of a container in accordance with at least some of the embodiments;
FIGURE 2 illustrates a detail perspective view of the highlighted area of FIGURE 1 depicting the locking mechanism of the container during a first phase of closing the locking mechanism;
FIGURE 3 illustrates a side elevation view of the locking mechanism of FIGURE 2;
FIGURE 4 illustrates a cross-sectional view of the locking mechanism of FIGURE 2;
FIGURE 5 illustrates a detail perspective view of the locking mechanism of FIGURE 2 during a second phase of closing the locking mechanism;
FIGURE 6 illustrates a side elevation view of the locking mechanism of FIGURE 5;
FIGURE 7 illustrates a cross-sectional view of the locking mechanism of FIGURE 5;
FIGURE 8 illustrates a detail perspective view of the locking mechanism of FIGURE 2 during a third phase of closing the locking mechanism;
FIGURE 9 illustrates a side elevation view of the locking mechanism of FIGURE 8, and
FIGURE 10 illustrates a cross-sectional view of the locking mechanism of FIGURE 8.

### EMBODIMENTS

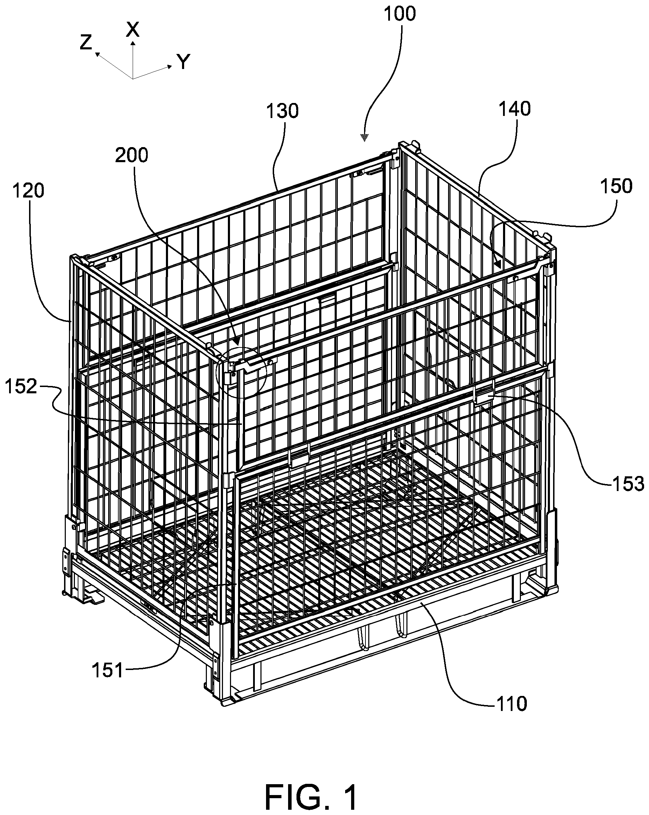

FIGURE 1 illustrates a container 100 in accordance with at least some embodiments in a fully deployed state. As may be seen, the general appearance of the container 100 resembles that of a conventional cage. It should, however, be noted that a similar locking mechanism may be provided on rolling chassis as well, i.e. to roll containers. The container 100 includes a base 110 with a quadrilateral floor that is supported above ground by stands provided at each corner of the floor. The stands are designed to generate enough clearance to enable lifting with a forklift from below. On the other hand, the stands extend above the floor so as to delimit a storage space for the collapsed state of the container 100. FIGURE 1 also plots three Cartesian dimensions, namely X, Y, and Z. In the illustrated example the first Cartesian dimension X is vertical and the second and third Cartesian dimensions Y and Z are horizontal. The same principles would work similarly on a slanted surface but for the sake of simplicity, the following disclosure will refer to these dimensions as vertical and horizontal, where applicable.

The container 100 also includes four cover elements referred to as walls 120, 130, 140, 150 one extending from each side of and orthogonally in respect to the base 110. The walls 120, 130, 140, 150 are preferably permanently attached to the base 110 as opposed to being detachable for storage. In the shown embodiments, one of the walls is a first wall 120, one is a second wall 150, one is a third wall 140, and one is a fourth wall 130. The first wall 120 is arranged opposite to the third wall 140. The first and third wall 120, 140 may each include a single panel pivotably connected to the base. The second and fourth walls 150, 130 are gates that include a first panel 151 pivotably connected to the base 110 and a second panel 152 pivotably connected to the first panel 151. The second and fourth walls 150, 130 are arranged opposite to each other. The walls 120, 130, 140, 150 are designed to be erected and collapsed sequentially, i.e. one at a time. The first and third wall 120, 140 may be folded at once, as illustrated, or sequentially similarly to the second and third walls 150, 130 by including hinged panels (not illustrated). The fourth wall 130 may alternatively include a solitary panel. In the following disclosure, however, the fourth wall 130 is disclosed as identical to the second wall 150.

The second wall 150 has two articulated panels 151, 152 each having a frame and a cover extending within the frame. In the illustrated embodiment, the frame is a hollow steel, aluminium, or metal alloy frame and the cover is a mesh. The cover may be manufactured from plastics, plywood, steel, composite, honeycomb, or similar suitable sheet. Naturally, the cover could be a solid plate or made from a different material, the panels preferably include a mesh or at least one opening within the periphery defined by the frame. The opening is intended to cooperate with a stopper of a latch that is provided to the one opening for limiting the rotation of the latch. On the other hand the stopper of the latch may engage the frame from the inside so as to act as a handle.

The first panel 151 acts as the bottom panel which may be collapsed or erected through a folding mechanism acting between the first panel 151 and the base 110 or corner support. Such folding mechanisms are known *per se.* The hinge 153 connecting the first panel 151 to the second panel 152, i.e. the top panel, provides for rotation and translation. To be more specific the hinge 153 allows for the second panel 152 to be translated in respect to the first panel 151 in a first dimension X, e.g. vertically. The hinge 153 also allows for the second panel 152 to be rotated in respect to the first panel 151 about an axis of rotation which extends in a second dimension Y, e.g. horizontally. To facilitate such range of motion, the hinge 153 may comprise a bracket attached to the first panel 151 and a loop attached to the second panel 152 such that the fit between the loop and the bracket enables the second panel 152 to be lifted and turned in respect to the first panel 151. In other words, the range of motion of the second wall is guided by the hinge 153. Such and comparable hinges are known *per se.* The second panel 152 is opened by first lifting and then turning the second panel 152 outward to lie against the first panel 151. Conversely, the second panel 152 is closed by first turning the second panel 152 up and above the first panel 151.

The opening and closing of the second panel 152 requires the unlocking and locking of a locking mechanism 200 which locks the second panel 152 to the adjacent wall, namely to the first 120 or third wall 140. While the disclosure about the locking mechanism 200 is described in connection with a double panel wall, it should be understood that a comparable mechanism could be fitted to a single panel wall or to a wall comprising more than two panels.

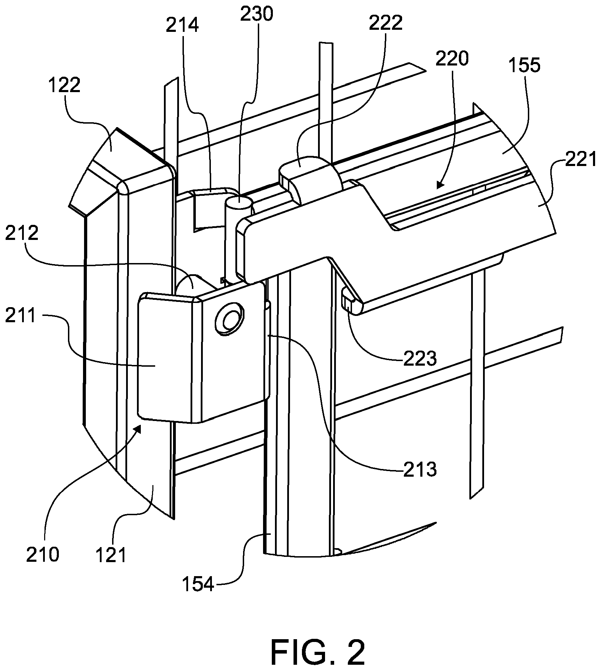

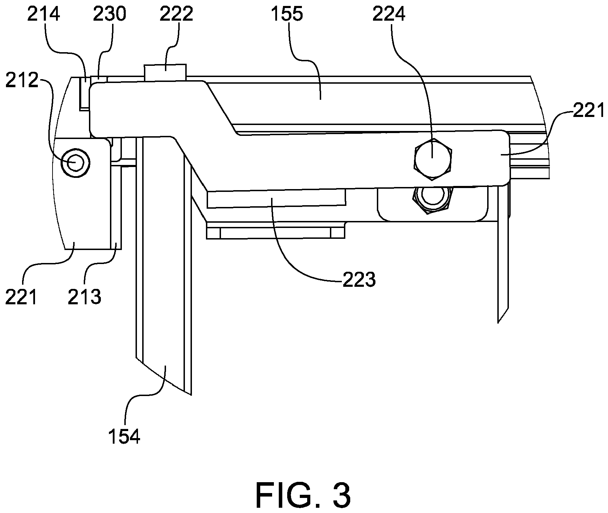

Locking mechanism 200 is shown in greater detail in FIGURES 2 and 3 which illustrate the locking mechanism 200 is a first locking stage. The locking mechanism 200 includes components that are attached to the first wall 120 and components that are attached to the second wall 150 and which cooperate with the components attached to the first wall 120. Attached to the corner of the container 100, particularly to the first wall 120, is a catch 210 for receiving the components attached to the second wall 150. The catch 210 includes a bracket 211 which is attached to the vertical frame section 121 of the first wall 120 through an affixer 212 such as a bolt and nut connection (as illustrated), a rivet (not illustrated), weld (not illustrated), or any other suitable means of attachment known in the field.

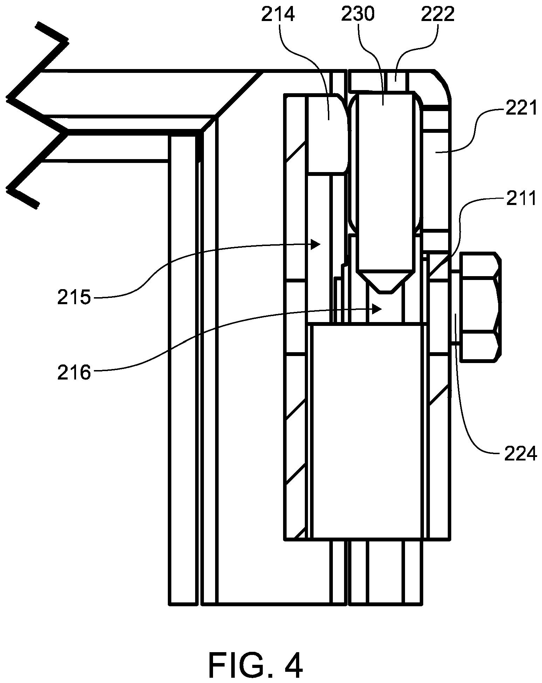

The bracket 211 is an open enclosure which defines a space therein. More specifically, the bracket 211 defines a space by enclosing an area in the second and third dimension Y, Z. The space is used to receive the cooperating components attached to the second wall 150. The space is limited in the second and third dimensions Y, Z by the enclosing bracket 211. The space may be limited or unlimited in the first dimension X from the bottom by an existing or non-existing closure (not illustrated). The space is partially limited from above by a first stopper 214. The first stopper 214 may be a projection from the bracket 211 into the space, the cross-section of which is defined by the bracket 211. The first stopper 214 may take the form of a tab (as illustrated), a bolt head (not illustrated), or any suitable means for limiting the space. As may be seen, the space is only partly limited by the first stopper 214 in the first dimension X. The first stopper 214 does not extend across the entire bracket 211, whereby the first stopper 214 divides the space into a restricted section 215, which is limited in the first dimension X, and to an unrestricted section 216, which is not limited in the first dimension X, on one side of the bracket 211 at least (FIGURE 4). To be more specific, the first stopper 214 does not limit the space below the bracket 211, where the cooperating components attached to the second wall 150 are not received. The bracket 211 also includes a second stopper 213 which may simply be a recessed top edge of the bracket 211. The purpose of the second stopper 213 will become apparent here after.

The second wall 150 includes two components that cooperate with the catch 210 of the first wall 120. One of the components is a claw 230 which is fixed to the second wall 150. The claw 230 is a projection which extends in the first dimension X for the purpose of being dropped into the unrestricted section 216 of the catch 210. The claw 230 is deviated from the vertical frame section 154 of the second wall 150 in the second dimension Y by either including a first section, which extends horizontally from the horizontal frame section 155 of the second wall 150, or by extending vertically from a horizontal extension of the horizontal frame section 155. The claw 230 therefore includes a first section, which extends from the second wall 150 in the second dimension Y, and a second section, which extends from the first section in the first dimension X.

Another of the components attached to the second wall 150 is a latch 220, which is connected to the second wall 150 in a rotatable fashion. The latch 220 includes a latch body 221 which has a generally elongated shape. One end of the latch body 121 is connected to the second wall 150, particularly to the horizontal frame section 155 thereof, through an axle 224. The axle 224 extends in the third dimension Z so as to produce an axis of rotation for the latch 220. The rotation enables the latch 220 to rotate between a closed position, in which the latch 220 is held by the catch 210, and an open position, in which the latch 220 may be released from the catch 210. The latch body 221 has two portions that extend parallel to each other in the second dimension Y and a third portion that connects the portions through a shift in the first dimension X. The top of the latch body 121 includes a third stopper 222 which is shaped to engage the respective top of the horizontal frame section 155 of the second wall 150. The third stopper 222 therefore limits the rotation of the latch 220 below the horizontal frame section 155. The bottom of the latch body 121 includes a fourth stopper 223 which is shaped to engage the respective bottom surface of the horizontal frame section 155 of the second wall 150. The fourth stopper 223 is located in the opening of the second panel 152 provided by the mesh. The fourth stopper 223 therefore limits the rotation of the latch 220 beyond a certain point above the horizontal frame section 155. The free end of the latch 220, i.e. the end opposing the pivoted end, may be turned into and out of the catch 210, as will become apparent here after.

FIGURES 2 to 4 show the locking mechanism 200 in a first phase of closing the locking mechanism. In this state the second panel 152 is elevated, i.e. displaced in the first dimension X, in respect to the first panel 151 of the second wall 150. If the second wall only had a solitary panel (not illustrated), the second wall would be elevated in respect to the base. FIGURE 3 shows the latch 220 elevated above the corresponding latch of the locking mechanism of the opposing fourth wall 130 (FIGURE 1). In this position the second panel 152 is high enough to clear the claw 230 over the bracket 211 and particularly the second stopper 213 of the catch 210. The second panel 152 may be slightly turned about the horizontal axis along the second dimension Y or translated in the third dimension Z to bring the claw 230 from the outside to be positioned above the catch 210. That motion is stopped by the first stopper 214 of the catch 210, against which the claw 230 will collide. This is the position shown in FIGURE 2. Looking at the mutual relationship between the catch 210 and the latch 220 in the cross-sectional view of FIGURE 4 it is noted that the claw 230 occupies the unrestricted section 216 of the catch 210. At this point the latch body 212 rests against the bracket 211. The second panel 152 is not aligned with the first panel 151 but turned about the hinge 153 slightly to the outside of the container 100.

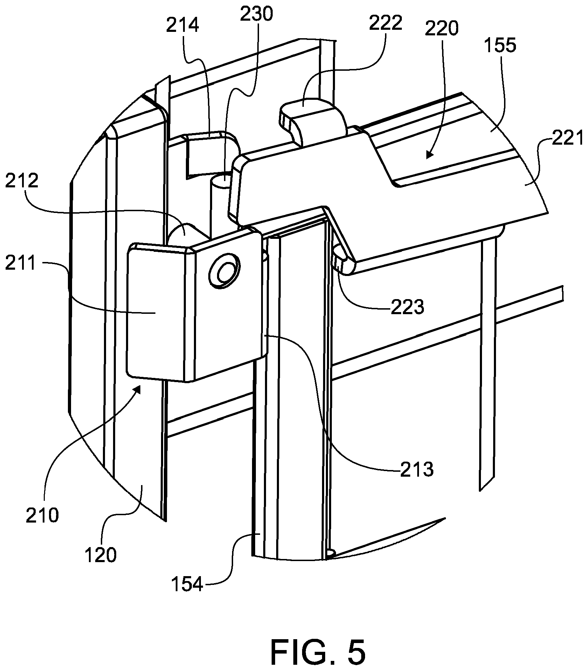

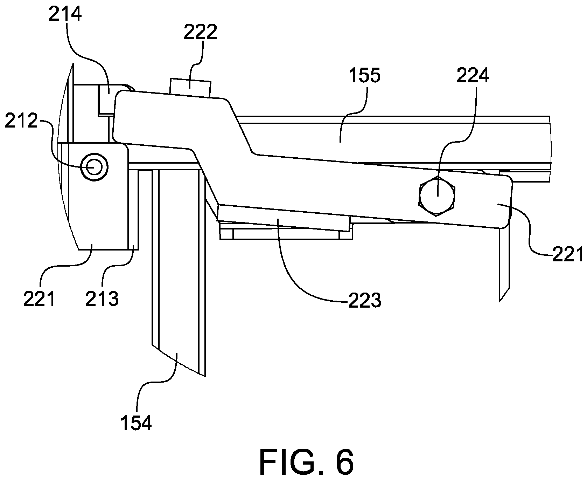

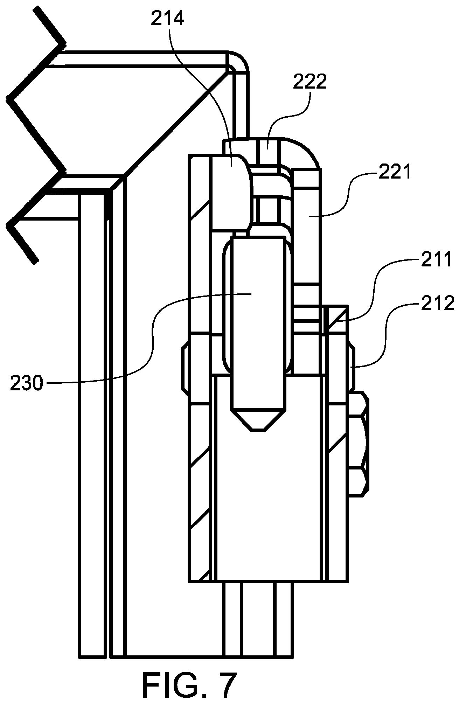

FIGURES 5 to 7 show the locking mechanism 200 in a second phase of closing the locking mechanism. This is an intermediate position. In this position the second panel 152 is dropped in respect to the first panel 151 of the second wall 150. As a result, the claw 230 has dropped below the first stopper 214 of the catch 210. The second panel 152 is also turned in to extend almost inline above the first panel 151, whereby the claw 230 has translated in the third dimension Z towards the being underneath the first stopper 214. The claw 230 has therefore transitioned towards the restricted section 215. The claw 230 is now prevented the first stopper 214 from lifting up which, in turn, prevents the second panel 152 from being lifted. The latch 220 remains in the opened position. The free end of the latch body 221 is above the second stopper 213 of the catch 210.

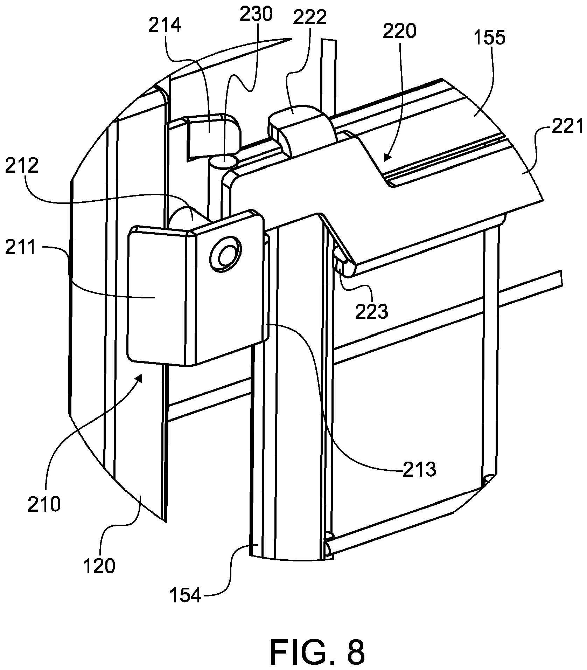

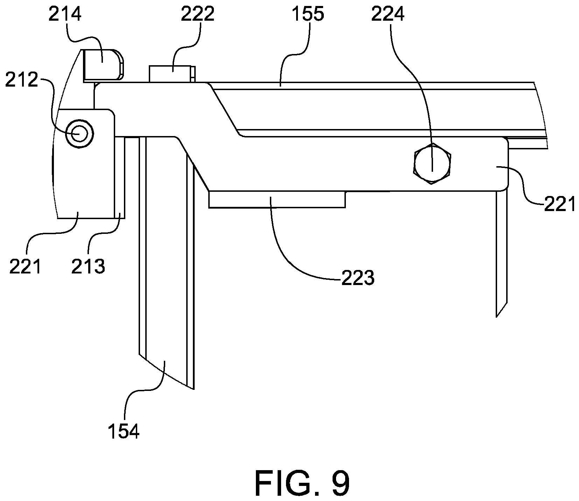

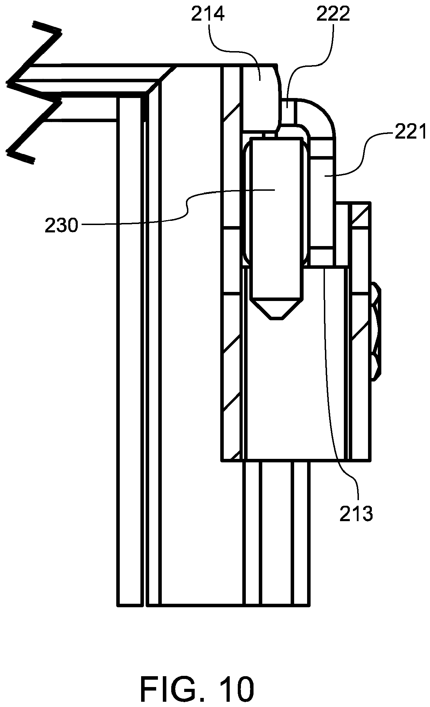

FIGURES 8 to 10 show the locking mechanism 200 in a third phase of closing the locking mechanism. This is the final locked position. In this position the second panel 152 has assumed an upright position above and in line with the first panel 151. The claw 230 has fully transitioned into the restricted section 215 of the catch 210 to be located below and underneath the first stopper 214. The latch 220 has dropped by rotating about the axle 224 such that the free end of the latch body 221 has entered the catch 210, namely the unrestricted section 216. The free end of the latch body 221 rests against the second stopper 213 which in the illustrated example takes the form of a recess in the bracket 221. Also, the third stopper 222 of the latch 220 rests against the horizontal frame section 155 of the second panel 152. The first stopper 214 of the catch 210 prevents the claw 230 from lifting out of the catch 210 and the latch 220, being inside the bracket 211, prevents the claw 230 from translating into the unrestricted section and then to be lifted out. The second wall 150 is thus locked to the adjacent walls 120, 140 and cannot be turned or lifted without unlocking the locking mechanism 200.

The closing and locking of the second wall 150 is straight forward. The open second panel 152 is closed by first turning it up about the hinge 153. The fourth stopper 223 of the latch 220 forms a handle which simultaneously lifts the latch body 221 about the axle 224 and engages the horizontal frame section 155 of the second panel 152 from the inside. The weight of the second panel 152 is then borne by the latch 220. The rotation of the second panel 152 is continued while lifting the second panel 152 up so as to bring the claw 230 above the catch 210 into the unrestricted section 216 (FIGURES 2 to 4). With the claw 230 aligned with the catch 210, the second panel 152 is slightly lowered so as to bring the claw 230 down so as to be cleared enough to be pushed underneath the first stopper 214 of the catch 210 (FIGURES 5 to 7). Then the move is completed by turning the second panel 152 until the claw 230 makes contact with the inner wall of the bracket 211, wherein the second panel 152 rests against the first panel 151, in respect to which the second panel 152 is aligned and above. The claw 230 is secured to the restricted section 215 of the catch 210 by allowing the latch 220 to drop into the bracket 211 (FIGURES 8 to 10). The rotation of the latch 220 is stopped by the second stopper 213 of the bracket 210 and by the third stopper 222 of the latch 220 making contact with the horizontal frame section 155 of the second panel 152.

Unlocking and opening of the second panel 152 is the reversed process. With the second panel 152 opened, the first panel 151 may be folded down on the base 110 through the folding mechanism there between. A similar process is repeated to the fourth wall 130, where after the first and third walls 120, 140 may be folded down.

**REFERENCE SIGNS LIST**

| **No.** | **Feature** | **No.** | **Feature** |
|---|---|---|---|
| 100 | container | 230 | claw |
| 110 | base | 210 | catch |
| 120 | first wall | 211 | bracket |
| 121 | vertical frame section | 212 | affixer |
| 122 | horizontal frame section | 213 | second stopper |
| 130 | fourth wall | 214 | first stopper |
| 140 | third wall | 215 | restricted section |
| 150 | second wall | 216 | unrestricted section |
| 151 | first panel | 220 | latch |
| 152 | second panel | 221 | latch body |
| 153 | hinge | 222 | third stopper |
| 154 | vertical frame section | 223 | fourth stopper |
| 155 | horizontal frame section | 224 | axle |
| 200 | locking mechanism | 230 | claw |
| 220 | latch | | |

## Claims

1. A container (100) comprising:
- a first wall (120),
- a second wall (150) configured to be opened and closed in respect to the first wall (120) through a range of motion, in which the second wall (150) is configured to undergo translation in a first Cartesian dimension (X) and rotation about a rotation axis which extends in a second Cartesian dimension (Y), and
- a locking mechanism (200) for selectively securing the second wall (150) to the first wall (120), the locking mechanism (200) comprising:
∘ a catch (210) provided to the first wall (120) and
∘ a claw (230) projecting from the second wall (150) in the first dimension (X),
wherein the catch (210) is shaped to receive the claw (230) in the first dimension (X) upon said translation of the second wall (150),
**characterized in that**:
the locking mechanism (200) comprises a cooperating latch (220) rotatably provided to the second wall (150), wherein the catch (210) is shaped to:
- guide the claw (230) in a third Cartesian dimension (Z) to a restricted section (215) of the catch (210) upon said rotation of the second wall (150), in which restricted section (215) the catch (210) is configured to prevent the claw (230) from being moved in the first dimension (X), and to
- receive the latch (220) to the closed position for preventing the claw (230) from being moved in the third dimension (Z).

2. The container (100) according to claim 1, wherein the locking mechanism (200) comprises an axle (224) which is configured to connect the latch (220) rotatably to the second wall (150).

3. The container (100) according to claim 2, wherein the axle (224) is configured to produce an axis of rotation which extends in the third dimension (Z).

4. The container (100) according to any one of the preceding claims, wherein the latch (220) is rotatably provided to the second wall (150) to be manipulated between:
- a closed position, in which the latch (220) engages the catch (210), and
- an open position, in which the latch (220) is disengaged from the catch (210).

5. The container (100) according to any one of the preceding claims, wherein the claw (230) comprises:
- a first section, which extends from the second wall (150) in the second dimension (Y), and
- a second section, which extends from the first section in the first dimension (X).

6. The container (100) according to any one of the preceding claims, wherein the catch (210) comprises:
- a bracket (211) which is shaped to define a space, and
- a first stopper (214) which is configured to separate the space into:
∘ the restricted section (215), which is limited in the first dimension (X), and to
∘ an unrestricted section (216), which is not limited in the first dimension (X) in the region, in which the claw (230) is moved into and out of the catch (210).

7. The container (100) according to claim 6, wherein the first stopper (214) extends in the third dimension (Z).

8. The container (100) according to claim 6 or 7, wherein the bracket (211) is configured to receive the latch (220) into the unrestricted section (216), when the claw (230) is in the restricted section (215).

9. The container (100) according to any one of the preceding claims 6 to 8, wherein the bracket comprises a second stopper (213) which is configured to engage the latch (220) and to limit the rotation thereof.

10. The container (100) according to any one of the preceding claims 6 to 9, wherein the bracket is configured to enclose the space in the third dimension for preventing the latch (220) from moving in the third dimension, when the latch (220) is in the closed position.

11. The container (100) according to any one of the preceding claims, wherein:
- the second wall (150) comprises a peripheral frame (154, 155),
- the latch (220) comprises a third stopper (222) which is configured to limit the rotation of the latch (220) by engaging the frame (154, 155) from the outside of the frame (154, 155).

12. The container (100) according to claim 11, wherein:
- the second wall (150) comprises at least one opening within the periphery defined by the frame (154, 155), and wherein
- the latch (220) comprises a fourth stopper (223) which is provided to the at least one opening and configured to limit the rotation of the latch (220) by engaging the frame (154, 155) from the inside.

13. The container (100) according to any one of the preceding claims, wherein:
- the second wall (150) comprises:
∘ a first panel (151),
∘ a second panel (152), and
∘ a hinge (153) which is configured to hinge the first panel (151) in respect to the second panel (152) so as to allow translation of the second panel (152) in the first dimension (X) and rotation about the rotation axis, which extends in the second dimension (Y), and wherein
- the latch (220) and claw (230) are provided to the second panel (152).

14. The container (100) according to claim 13, wherein:
- the container (100) comprises a third wall (140) opposing the first wall (120),
- the second wall (150) extends between the first wall (120) and third wall (140), and wherein
- a second such locking mechanism is provided to lock the second wall (150) to the third wall (140).

15. The container (100) according to claim 14, wherein:
- the container (100) comprises a fourth wall (130) opposing the second wall (150),
- the fourth wall (130) is similar to the second wall (150), and wherein
- a third and fourth such locking mechanisms are provided to lock the fourth wall (130) to the first and third wall (120, 140).

16. The container (100) according to any one of the preceding claims 13 to 15, wherein:
- the container (100) comprises a base (110), and wherein
- the walls (120, 130, 140, 150) are connected to the base (110) through a folding mechanisms for selectively folding and erecting the walls (120, 130, 140, 150), whereby the container (100) is a folding container.

17. The container (100) according to any one of the preceding claims 13 to 16, wherein the range of motion of the second wall is guided by the hinge (153).

## Patentansprüche

1. Behälter (100), umfassend:
- eine erste Wand (120),
- eine zweite Wand (150), die dazu ausgelegt ist, sich in Bezug auf die erste Wand (120) durch einen Bewegungsbereich zu öffnen und zu schließen, wobei die zweite Wand (150) dazu ausgelegt ist, eine Translation in eine erste kartesische Dimension (X) und eine Drehung um eine Drehachse zu erfahren, die sich in eine zweite kartesische Dimension (Y) erstreckt, und
- einen Verriegelungsmechanismus (200) zur selektiven Sicherung der zweiten Wand (150) an der ersten Wand (120), wobei der Verriegelungsmechanismus (200) Folgendes umfasst:
o eine an der ersten Wand (120) bereitgestellte Arretierung (210) und
o eine Klaue (230), die von der zweiten Wand (150) in die erste Dimension (X) vorsteht,
wobei die Arretierung (210) so geformt ist, dass sie die Klaue (230) in der ersten Dimension (X) bei der Translation der zweiten Wand (150) aufnimmt,
**dadurch gekennzeichnet, dass**:
der Verriegelungsmechanismus (200) einen zusammenwirkenden Riegel (220) umfasst, die drehbar an der zweiten Wand (150) bereitgestellt ist,
wobei die Arretierung (210) geformt ist zum:
- Führen der Klaue (230) in eine dritte kartesische Dimension (Z) zu einem begrenzten Bereich (215) der Arretierung (210) bei der Drehung der zweiten Wand (150), wobei der begrenzte Bereich (215) der Arretierung (210) dazu ausgelegt ist, zu verhindern, dass die Klaue (230) in die erste Dimension (X) bewegt wird, und zum
- Aufnehmen des Riegels (220) in der geschlossenen Position, um zu verhindern, dass die Klaue (230) in die dritte Dimension (z) bewegt wird.

2. Behälter (100) nach Anspruch 1, wobei der Verriegelungsmechanismus (200) eine Achse (224) umfasst, die dazu ausgelegt ist, den Riegel (220) drehbar mit der zweiten Wand (150) zu verbinden.

3. Behälter (100) nach Anspruch 2, wobei die Achse (224) dazu ausgelegt ist, eine Drehachse zu erzeugen, die sich in die dritte Dimension (Z) erstreckt.

4. Behälter (100) nach einem der vorstehenden Ansprüche, wobei der Riegel (220) drehbar an der zweiten Wand (150) bereitgestellt ist, um manipuliert zu werden zwischen:
- einer geschlossenen Position, in welcher der Riegel (220) in die Arretierung (210) eingreift, und
- einer offenen Position, in welcher der Riegel (220) aus der Arretierung (210) ausgerastet ist.

5. Behälter (100) nach einem der vorstehenden Ansprüche, wobei die Klaue (230) Folgendes umfasst:
- einen ersten Bereich, der sich von der zweiten Wand (150) in die zweite Dimension (Y) erstreckt, und
- einen zweiten Bereich, der sich vom ersten Bereich in die erste Dimension (X) erstreckt.

6. Behälter (100) nach einem der vorstehenden Ansprüche, wobei die Arretierung (210) Folgendes umfasst:
- eine Klammer (211), die zum Definieren eines Raums geformt ist, und
- einen ersten Stopper (214), der dazu ausgelegt ist, den Raum zu unterteilen in:
o den begrenzten Bereich (215), der in der ersten Dimension (X) begrenzt ist, und in
o einen unbegrenzten Bereich (216), der in der ersten Dimension (X) in dem Bereich nicht begrenzt ist, in dem die Klaue (230) in die Arretierung (210) hinein und aus ihr heraus bewegt wird.

7. Behälter (100) nach Anspruch 6, wobei sich der erste Stopper (214) in die dritte Dimension (Z) erstreckt.

8. Behälter (100) nach Anspruch 6 oder 7, wobei die Klammer (211) dazu ausgelegt ist, den Riegel (220) in dem unbegrenzten Bereich (216) aufzunehmen, wenn sich die Klaue (230) in dem begrenzten Bereich (215) befindet.

9. Behälter (100) nach einem der vorstehenden Ansprüche 6 bis 8, wobei die Klammer einen zweiten Stopper (213) umfasst, der dazu ausgelegt ist, in den Riegel (220) einzugreifen und die Drehung desselben zu begrenzen.

10. Behälter (100) nach einem der vorstehenden Ansprüche 6 bis 9, wobei die Klammer dazu ausgelegt ist, den Raum in der dritten Dimension zu umschließen, um zu verhindern, dass sich der Riegel (220) in die dritte Dimension bewegt, wenn sich der Riegel (220) in der geschlossenen Position befindet.

11. Behälter (100) nach einem der vorstehenden Ansprüche, wobei:
- die zweite Wand (150) einen peripheren Rahmen (154, 155) umfasst,
- der Riegel (220) einen dritten Stopper (222) umfasst, der dazu ausgelegt ist, die Drehung des Riegels (220) zu begrenzen, indem er von der Außenseite des Rahmens (154, 155) in den Rahmen (154, 155) eingreift.

12. Behälter (100) nach Anspruch 11, wobei:
- die zweite Wand (150) mindestens eine Öffnung innerhalb des durch den Rahmen (154, 155) definierten Umfangs umfasst, und wobei
- der Riegel (220) einen vierten Stopper (223) umfasst, der an der mindestens einen Öffnung bereitgestellt ist und dazu ausgelegt ist, die Drehung des Riegels (220) zu begrenzen, indem er von der Innenseite in den Rahmen (154, 155) eingreift.

13. Behälter (100) nach einem der vorstehenden Ansprüche, wobei:
- die zweite Wand (150) Folgendes umfasst:
o eine erste Platte (151),
o eine zweite Platte (152), und
o ein Gelenk (153), das dazu ausgelegt ist, die erste Platte (151) in Bezug auf die zweite Platte (152) anzulenken, sodass eine Translation der zweiten Platte (152) in die erste Dimension (X) und eine Drehung um die Drehachse, die sich in die zweite Dimension (Y) erstreckt, ermöglicht wird, und wobei
- der Riegel (220) und die Klaue (230) an der zweiten Platte (152) bereitgestellt sind.

14. Behälter (100) nach Anspruch 13, wobei:
- der Behälter (100) eine dritte Wand (140) umfasst, die der ersten Wand (120) gegenüberliegt,
- die zweite Wand (150) sich zwischen der ersten Wand (120) und der dritten Wand (140) erstreckt, und wobei
- ein zweiter solcher Verriegelungsmechanismus bereitgestellt ist, um die zweite Wand (150) mit der dritten Wand (140) zu verriegeln.

15. Behälter (100) nach Anspruch 14, wobei:
- der Behälter (100) eine vierte Wand (130) umfasst, die der zweiten Wand (150) gegenüberliegt,
- die vierte Wand (130) der zweiten Wand (150) ähnlich ist, und wobei
- ein dritter und vierter solcher Verriegelungsmechanismen bereitgestellt sind, um die vierte Wand (130) mit der ersten und dritten Wand (120, 140) zu verriegeln.

16. Behälter (100) nach einem der vorstehenden Ansprüche 13 bis 15, wobei:
- der Behälter (100) eine Basis (110) umfasst, und wobei
- die Wände (120, 130, 140, 150) mit der Basis (110) durch einen Faltmechanismus zum selektiven Falten und Aufrichten der Wände (120, 130, 140, 150) verbunden sind, wodurch der Behälter (100) ein Faltbehälter ist.

17. Behälter (100) nach einem der vorstehenden Ansprüche 13 bis 16, wobei der Bewegungsbereich der zweiten Wand durch das Gelenk (153) geführt wird.

## Revendications

1. Contenant (100) comprenant :
- une première paroi (120),
- une deuxième paroi (150) configurée pour être ouverte et fermée par rapport à la première paroi (120) dans une plage de déplacement, dans laquelle la deuxième paroi (150) est configurée pour subir une translation dans une première dimension cartésienne (X) et une rotation autour d'un axe de rotation qui s'étend dans une deuxième dimension cartésienne (Y), et
- un mécanisme de verrouillage (200) pour fixer de manière sélective la deuxième paroi (150) à la première paroi (120), le mécanisme de verrouillage (200) comprenant :
○ une fermeture (210) prévue sur la première paroi (120) et
○ une griffe (230) faisant saillie à partir de la deuxième paroi (150) dans la première dimension (X),
dans lequel la fermeture (210) est formée pour recevoir la griffe (230) dans la première dimension (X) lors de ladite translation de la deuxième paroi (150),
**caractérisé en ce que** :
le mécanisme de verrouillage (200) comprend un loquet coopérant (220) prévu de manière rotative sur la deuxième paroi (150),
dans lequel la fermeture (210) est formée pour :
- guider la griffe (230) dans une troisième dimension cartésienne (Z) vers une section restreinte (215) de la fermeture (210) lors de ladite rotation de la deuxième paroi (150), dans laquelle section restreinte (215) la fermeture (210) est configurée pour empêcher la griffe (230) d'être déplacée dans la première dimension (X), et pour
- recevoir le loquet (220) dans la position fermée pour empêcher la griffe (230) d'être déplacée dans la troisième dimension (Z).

2. Contenant (100) selon la revendication 1, dans lequel le mécanisme de verrouillage (200) comprend un arbre (224) qui est configuré pour relier le loquet (220) de manière rotative à la deuxième paroi (150).

3. Contenant (100) selon la revendication 2, dans lequel l'arbre (224) est configuré pour produire un axe de rotation qui s'étend dans la troisième dimension (Z).

4. Contenant (100) selon l'une quelconque des revendications précédentes, dans lequel le loquet (220) est prévu de manière rotative sur la deuxième paroi (150) pour être manipulé entre :
- une position fermée, dans laquelle le loquet (220) met en prise la fermeture (210), et
- une position ouverte, dans laquelle le loquet (220) est retiré de la fermeture (210).

5. Contenant (100) selon l'une quelconque des revendications précédentes, dans lequel la griffe (230) comprend :
- une première section, qui s'étend à partir de la deuxième paroi (150) dans la deuxième dimension (Y), et
- une seconde section, qui s'étend à partir de la première section dans la première dimension (X).

6. Contenant (100) selon l'une quelconque des revendications précédentes, dans lequel la fermeture (210) comprend :
- un support (211) qui est formé pour définir un espace, et
- une première butée (214) qui est configurée pour séparer l'espace en :
○ la section restreinte (215), qui est limitée dans la première dimension (X), et pour
○ une section non restreinte (216), qui n'est pas limitée dans la première dimension (X) dans la région, dans laquelle la griffe (230) est déplacée dans et hors de la fermeture (210).

7. Contenant (100) selon la revendication 6, dans lequel la première butée (214) s'étend dans la troisième dimension (Z).

8. Contenant (100) selon la revendication 6 ou 7, dans lequel le support (211) est configuré pour recevoir le loquet (220) dans la section non restreinte (216), lorsque la griffe (230) est dans la section restreinte (215).

9. Contenant (100) selon l'une quelconque des revendications précédentes 6 à 8, dans lequel le support comprend une deuxième butée (213) qui est configurée pour mettre en prise le loquet (220) et pour limiter la rotation de celui-ci.

10. Contenant (100) selon l'une quelconque des revendications précédentes 6 à 9, dans lequel le support est configuré pour clôturer l'espace dans la troisième dimension pour empêcher le loquet (220) de se déplacer dans la troisième dimension, lorsque le loquet (220) est dans la position fermée.

11. Contenant (100) selon l'une quelconque des revendications précédentes, dans lequel :
- la deuxième paroi (150) comprend un cadre périphérique (154, 155),
- le loquet (220) comprend une troisième butée (222) qui est configurée pour limiter la rotation du loquet (220) en mettant en prise le cadre (154, 155) depuis l'extérieur du cadre (154, 155).

12. Contenant (100) selon la revendication 11, dans lequel :
- la deuxième paroi (150) comprend au moins une ouverture dans la périphérie définie par le cadre (154, 155), et dans lequel
- le loquet (220) comprend une quatrième butée (223) qui est prévue sur la au moins une ouverture et configurée pour limiter la rotation du loquet (220) en mettant en prise le cadre (154, 155) depuis l'intérieur.

13. Contenant (100) selon l'une quelconque des revendications précédentes, dans lequel :
- la deuxième paroi (150) comprend :
○ un premier panneau (151),
○ un second panneau (152), et
○ une charnière (153) qui est configurée pour articuler le premier panneau (151) par rapport au second panneau (152) de manière à permettre une translation du second panneau (152) dans la première dimension (X) et une rotation autour de l'axe de rotation, qui s'étend dans la deuxième dimension (Y), et dans lequel
- le loquet (220) et la griffe (230) sont prévus sur le second panneau (152).

14. Contenant (100) selon la revendication 13, dans lequel :
- le contenant (100) comprend une troisième paroi (140) opposée à la première paroi (120),
- la deuxième paroi (150) s'étend entre la première paroi (120) et la troisième paroi (140), et dans lequel
- un deuxième de ces mécanismes de verrouillage est prévu pour verrouiller la deuxième paroi (150) sur la troisième paroi (140).

15. Contenant (100) selon la revendication 14, dans lequel :
- le contenant (100) comprend une quatrième paroi (130) opposée à la deuxième paroi (150),
- la quatrième paroi (130) est similaire à la deuxième paroi (150), et dans lequel
- un troisième et un quatrième de ces mécanismes de verrouillage sont prévus pour verrouiller la quatrième paroi (130) sur la première et la troisième paroi (120, 140).

16. Contenant (100) selon l'une quelconque des revendications précédentes 13 à 15, dans lequel :
- le contenant (100) comprend une base (110), et dans lequel
- les parois (120, 130, 140, 150) sont reliées à la base (110) par le biais d'un mécanisme de pliage pour plier et dresser de manière sélective les parois (120, 130, 140, 150), selon lequel le contenant (100) est un contenant pliant.

17. Contenant (100) selon l'une quelconque des revendications précédentes 13 à 16, dans lequel la plage de déplacement de la deuxième paroi est guidée par la charnière (153).
